# FASCICULE DE BREVET EUROPEEN

(11) **EP 4 657 694 B1**
(45) Date de publication et mention de la délivrance du brevet: **16.09.2026**
(21) Numéro de dépôt: 25179146.3
(22) Date de dépôt: 27.05.2025
(51) Int. Cl.: H02J 3/14, H02J 13/00, H02J 13/12

(54) **DISPOSITIF DE CONTROLE D'ALIMENTATION ELECTRIQUE ET METHODE ASSOCIEE**
STROMVERSORGUNGSSTEUERVORRICHTUNG UND VERFAHREN
POWER SUPPLY CONTROL DEVICE AND METHOD

(30) Priorité: 30.05.2024 FR 2405575
(43) Date de publication de la demande: 03.12.2025
(73) Titulaire: Sagemcom Energy & Telecom SAS, 92270 Bois-Colombes (FR)
(72) Inventeur: TEBOULLE, Henri, 92270 BOIS-COLOMBES (FR); GRINCOURT, Christophe, 92270 BOIS-COLOMBES (FR)
(74) Mandataire: Novagraaf Technologies

(56) Documents cités:
- EP-A1- 2 270 948
- EP-A1- 4 350 925
- FR-A1- 3 114 699
- US-A1- 2007 179 676

## Description

### DOMAINE TECHNIQUE

Les différents exemples de réalisation décrits dans la présente divulgation concernent un dispositif de contrôle d'alimentation électrique et une méthode mise en œuvre par ce dispositif. Le dispositif divulgué est adapté notamment au chargement d'un véhicule électrique ou à l'alimentation d'appareils tel des radiateurs électriques ou autre, à travers une même prise électrique. Le dispositif peut être un compteur électrique.

### ARRIERE PLAN

La consommation domestique d'électricité évolue notamment par l'apparition de nouveaux besoins, tels que la nécessité de pouvoir charger un véhicule électrique. Ceci génère une consommation importante sur de longues périodes dans la journée, qui peut entrer en conflit avec d'autres types de consommation. Or, les fournisseurs d'électricité imposent généralement une puissance maximale d'utilisation dans les contrats d'abonnés. Si cette puissance maximale d'utilisation est dépassée pendant un certain temps, le compteur électrique de l'abonné peut tout simplement couper l'alimentation électrique.

Il existe un besoin pour contrôler la consommation d'électricité prenant en compte cette contrainte.

Le document EP2270948A1 concerne le délestage dans un réseau électrique. Le document FR3114699A1 concerne la gestion de charges.

### RESUME

Un premier aspect de la présente divulgation concerne une méthode de contrôle de l'alimentation électrique d'un deuxième groupe d'appareils comportant au moins un appareil, la méthode étant mise en œuvre par un dispositif comprenant un premier processeur adapté à réaliser des mesures de consommation électrique, un second processeur et un organe de coupure contrôlé par le second processeur pour déclencher ou arrêter l'alimentation du deuxième groupe, la méthode comprenant :
- l'obtention par le second processeur, de la consommation électrique totale d'un premier groupe d'appareils et du second groupe d'appareils pendant une période de temps, la consommation électrique totale étant déterminée par le premier processeur; la durée de la période de temps étant inférieure à une durée maximale pendant laquelle la puissance demandée par les deux groupes peut être supérieure à une puissance maximale à respecter ;
- la détermination si la consommation totale est inférieure à un second seuil, et dans l'affirmative, la fermeture de l'organe de coupure pour permettre l'alimentation du deuxième groupe ;
- la détermination si la consommation totale est supérieure à un premier seuil et dans l'affirmative, l'ouverture de l'organe de coupure pour suspendre l'alimentation du deuxième groupe;
- le premier seuil étant inférieur à un seuil de consommation maximale à respecter pour la consommation électrique totale ; le second seuil étant inférieur au premier seuil, le second seuil étant supérieur à un minimum de consommation par période sur un intervalle de temps incluant une pluralité de périodes consécutives de même durée ;
- la réitération des étapes précédentes sur des périodes de temps successives.

La présente méthode peut être appliquée à l'alimentation de tout appareil ayant une consommation significative (par exemple supérieure ou égale à 10%, par rapport à la puissance souscrite sur une période donnée d'une installation électrique).

Les marges minimales prises entre d'une part le premier seuil et le seuil de consommation maximale à respecter et d'autre part entre le second seuil et le minimum de consommation peuvent être définies pour réduire l'impact de bruit dans les mesures de consommation. Il est à noter que selon certains modes de réalisation, ces seuils et notamment le premier seuil peuvent être choisis avec une marge plus grande pour influer sur la fréquence d'ouverture et de fermeture de l'organe de coupure.

Selon un ou plusieurs exemples de réalisation, la consommation maximale est fonction de la puissance maximale à respecter.

On établit ainsi une équivalence entre la puissance souscrite à respecter et la consommation maximale à respecter, sur une période. La puissance souscrite est exprimée en kW et correspond à la puissance à ne pas dépasser pendant un certain temps - par exemple vingt minutes. L'énergie maximale pouvant être consommée pendant ce même temps est, quant à elle, exprimée en kWh et correspond à l'énergie consommée à la puissance maximale pendant ce même temps.

Selon un ou plusieurs exemples de réalisation, le premier seuil possède une valeur unique. Selon un ou plusieurs exemples de réalisation, le premier seuil est fonction de l'heure de la journée.

Selon un ou plusieurs exemples de réalisation, la méthode comprend l'assignation au premier seuil d'une première valeur (609) pour un premier tarif d'électricité fonction de l'heure et d'une seconde valeur (610) pour un second tarif d'électricité fonction de l'heure, le premier tarif étant supérieur au second tarif et la première valeur étant inférieure à la seconde valeur.

Selon un ou plusieurs exemples de réalisation, la méthode comprend la détermination de la puissance maximale, Pmax, demandée par le deuxième groupe sur ladite durée, le premier seuil et le second seuil étant choisis pour respecter la relation $Premier Seuil - Second Seuil > Pmax ∗ dur é e d ′ une p é riode$

Selon un ou plusieurs exemples de réalisation, l'intervalle de temps est d'un jour.

Selon un ou plusieurs exemples de réalisation, le deuxième groupe d'appareils comprend un chargeur de voiture électrique.

Un second aspect de la présente divulgation concerne un dispositif de contrôle de l'alimentation électrique d'un deuxième groupe d'appareils comportant au moins un appareil, le dispositif comprenant un premier processeur adapté à réaliser des mesures de consommation électrique, un second processeur et un organe de coupure contrôlé par le second processeur pour déclencher ou arrêter l'alimentation du deuxième groupe, permettant l'obtention de la consommation électrique totale du premier groupe d'appareils et d'un second groupe d'appareils pendant une période de temps, la durée de la période de temps étant inférieure à une durée maximale pendant laquelle la puissance demandée par les deux groupes peut être supérieure à une puissance maximale à respecter, le second processeur étant configuré pour conduire le dispositif à effectuer :
la détermination si la consommation totale est inférieure à un second seuil, et dans l'affirmative, la fermeture de l'organe de coupure pour permettre l'alimentation du deuxième groupe ;
la détermination si la consommation totale est supérieure à un premier seuil et dans l'affirmative, l'ouverture de l'organe de coupure pour suspendre l'alimentation du deuxième groupe;
le premier seuil étant inférieur à un seuil de consommation maximale à respecter pour la consommation électrique totale; le second seuil étant inférieur au premier seuil, le second seuil étant supérieur à un minimum de consommation par période sur un intervalle de temps incluant une pluralité de périodes consécutives de même durée;
la réitération des étapes précédentes sur des périodes de temps successives.

Selon un ou plusieurs exemples de réalisation, la consommation maximale est fonction de la puissance maximale à respecter.

Selon un ou plusieurs exemples de réalisation, le dispositif étant un compteur électrique comprenant un coupe-circuit commandé par le second processeur, le coupe-circuit étant disposé entre une entrée de phase d'un réseau de fourniture d'électricité et l'organe de coupure, l'alimentation du premier groupe étant réalisée par l'intermédiaire d'une phase prise entre le coupe-circuit et l'organe de coupure, et l'alimentation du deuxième groupe étant réalisée par l'intermédiaire d'une phase en sortie de l'organe de coupure.

Selon un ou plusieurs exemples de réalisation, l'organe de coupure est un relais de puissance.

Selon un ou plusieurs exemples de réalisation, l'organe de coupure est relié au coupe-circuit par l'intermédiaire d'un shunt de mesure.

Selon un ou plusieurs exemples de réalisation, la sortie de l'organe de coupure est configurée pour être connectée à une prise électrique adaptée à la connexion du deuxième groupe d'appareils.

Selon un ou plusieurs exemples de réalisation, le dispositif décrit ci-dessus est configuré pour mettre en œuvre les méthodes décrites ci-dessus.

Est également divulgué un produit programme d'ordinateur comportant des instructions qui lorsqu'elles sont exécutées par au moins un processeur causent la mise en œuvre d'une telle méthode.

Est également divulgué un support de stockage lisible par un ordinateur comportant des instructions qui lorsqu'elles sont exécutées par un processeur causent la mise en œuvre d'une telle méthode. Dans un mode de réalisation, le support de stockage est non transitoire.

### BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure 1 est un diagramme schématique d'un compteur selon un ou plusieurs exemples de réalisation non limitatifs.
La figure 2 est un graphe représentant un exemple de courbes de charges d'un abonné dans le cas où l'une des méthodes décrites n'est pas mise en œuvre.
La figure 3 est un graphe représentant un exemple de courbes de charges d'un abonné dans le cas de la mise en œuvre d'une méthode selon un premier exemple de réalisation.
La figure 4 est un graphe représentant un exemple de courbes de charges d'un abonné dans le cas de la mise en œuvre d'une méthode selon un second exemple de réalisation.
La figure 5 est un algorigramme d'une méthode selon le premier exemple de réalisation.
La figure 6 est un algorigramme d'une méthode selon le second exemple de réalisation.

### DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

Selon un ou plusieurs exemples de réalisation, un dispositif et une méthode de contrôle d'un circuit d'alimentation électrique sont présentés. Il est à noter que le contrôle s'effectue en temps réel et permet de ne pas dépasser la puissance souscrite par l'abonné auquel est associé le compteur pendant plus d'une durée autorisée. La connaissance à priori de la puissance demandée en temps réel par ce circuit d'alimentation n'est de plus pas nécessaire. Le dispositif est avantageusement un compteur électrique ou intégré à un compteur électrique, mais peut également être implémenté sous la forme d'un dispositif distinct, qui a accès à certaines informations relatives à la consommation d'électricité instantanée totale du lieu concerné par une puissance maximale souscrite auprès d'un fournisseur d'électricité.

Selon un ou plusieurs exemples de réalisation, dans le contexte de la fourniture d'électricité soumise à contrainte de respecter une puissance consommée maximale, il est prévu deux circuits d'alimentation électrique distincts. Le premier circuit est prévu pour la consommation électrique domestique classique. Le second circuit, qui est le circuit d'alimentation que l'on se propose de contrôler à l'aide des méthodes divulguées, est réservé à l'alimentation d'un ou plusieurs appareils exigeant une consommation importante sur de longues périodes, par exemple toute une journée ou une grande partie de la journée. Il s'agit là du chargement d'un véhicule électrique ou encore de radiateurs électriques. La consommation globale par l'intermédiaire de ces deux circuits se superpose par rapport à la contrainte de puissance maximale à respecter. Selon un ou plusieurs exemples de réalisation, il est prévu d'ouvrir et de fermer le second circuit en fonction de la consommation globale pour respecter les contraintes imposées.

L'ouverture et la fermeture du second circuit peuvent être effectués à l'aide d'un organe de coupure tel que par exemple un relais de puissance. L'organe de coupure est commandé par un processeur approprié, qui peut avantageusement être un processeur déjà présent dans le dispositif pour la gestion du premier circuit.

Il est défini des seuils de la consommation globale utilisés pour mettre en place en fonctionnement en hystérésis, le second circuit étant coupé lorsque la consommation globale dépasse un seuil haut, le second circuit étant refermé lorsque la consommation redescend en dessous d'un seuil bas.

Ainsi, la priorité va vers la consommation du premier circuit. Un utilisateur pourra faire fonctionner normalement ses appareils domestiques, qui ne sont pas impactés par l'ouverture ou la fermeture du second circuit. L'alimentation des appareils à consommation importante et sur des durées longues sera effectuée le cas échéant de manière intermittente, ce qui sera globalement indolore et transparent pour l'utilisateur au vu des applications du second circuit.

Les seuils peuvent être définis manuellement ou automatiquement selon les exemples de réalisation et leurs variantes.

Deux exemples de réalisation seront décrits. Dans le premier exemple, le seuil haut est à un niveau unique pendant la journée. Comme le niveau du seuil haut impacte la fréquence de la coupure et de la fermeture du second circuit, les inventeurs proposent dans le second exemple d'utiliser cette particularité de façon avantageuse pour faire varier le niveau du seuil haut en cours de journée. Cette variation permet par exemple de s'adapter notamment à une autre contrainte de consommation fonction de l'heure de la journée, tel que le coût de l'électricité : en heures pleines (heures à tarif élevé), le seuil haut sera choisi à un niveau plus bas qu'en heures creuses (heures à tarif réduit) pour déclencher une ouverture du second circuit de manière plus fréquente et ainsi réduire le temps de chargement en heures pleines.

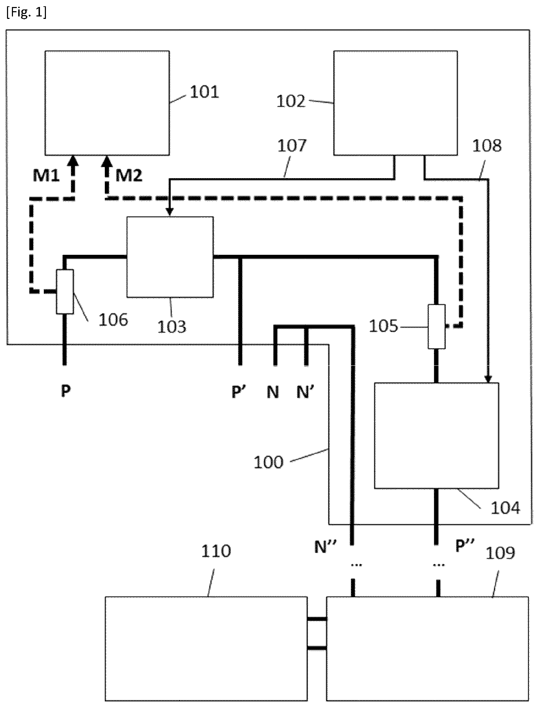

La figure 1 est un diagramme bloc illustrant un exemple d'implémentation d'un dispositif 100 applicable aux deux exemples de réalisation, en notant que la structure présentée l'est à des fins illustratives pour clarifier le propos, et que d'autres implémentations peuvent être utilisées. Selon l'exemple de la figure 1, le dispositif 100 est un compteur électrique. Selon ce même exemple, ce compteur est monophasé, mais la présente divulgation peut facilement être adaptée à un contexte multiphasé et notamment triphasé en surveillant la consommation globale sur l'une des phases. La lettre 'P' indique la phase et la lettre 'N' indique le neutre électrique, P et N - sans apostrophes - représentant la connexion au réseau du fournisseur d'électricité. Le compteur 100 comporte de manière classique un processeur de métrologie 101 et un coupe-circuit 103 ('breaker' en anglais). Le processeur de métrologie 101 mesure des courants, tensions et/ou énergies consommées. Dans le cadre de l'exemple de la figure 1, ces grandeurs sont mesurées (mesure M1 dans la figure 1) à travers un shunt de mesure 106, situé entre la phase P et le coupe-circuit 103. Un processeur d'application 102 contrôle l'état du coupe-circuit 103 à l'aide d'un signal de commande 107. Le processeur 102 active le coupe-circuit notamment lorsque la puissance consomme dépasse la puissance souscrite par l'abonné, par exemple lorsque ce dépassement est détecté sur un intervalle de temps d'une durée supérieure à un seuil, désigné par seuil T1 dans ce qui suit (T1 = 20 minutes par exemple).

Une phase P' (ou phase primaire) en sortie du coupe-circuit 103 représente la phase en sortie du compteur. Dans le contexte du présent exemple, la phase P' est la phase par laquelle est alimenté le local associé au compteur, excluant le chargement du véhicule électrique. La phase P' est aussi appelée phase principale. Un neutre N' en sortie du compteur et associé à la phase P' est relié au neutre N en entrée du compteur.

Selon le présent exemple de réalisation, le compteur comporte, en dérivation du circuit de phase P' classique (premier circuit mentionné plus haut), un circuit de phase P" (second circuit) destiné à l'alimentation d'un ou plusieurs appareils électriques 110 au travers d'une (ou de plusieurs) prise(s) électrique(s) 109 reliée(s) à la (même) phase P" et au neutre N". La prise électrique 109 est par exemple une prise murale dédiée. Il est à noter que la prise électrique 109 peut être reliée à la sortie du compteur à d'autres circuits selon le ou les appareils à alimenter en électricité (tel 110).

Dans ce qui suit, l'exemple du chargement d'un véhicule électrique sera pris, mais il est bien clair que la divulgation ne se limite pas à ce contexte particulier et que le chargement d'autres appareils peut être mis en œuvre.

Concernant le chargement d'un véhicule électrique, on parlera de 'SCVE', pour Système de Chargement de Véhicule Electrique pour désigner soit la fonctionnalité de chargement en tant que telle, soit les différents composants associés à cette fonctionnalité. L'acronyme SCVE correspond à l'acronyme 'EVCS' pour 'Electrical Vehicle Charging Station' en anglais. Le circuit de phase SCVE comporte un relais de puissance 104, dont une entrée est reliée à la phase P' en sortie du coupe-circuit 103 à travers un shunt de mesure 105. Le shunt de mesure 105 est optionnel. Le processeur métrologique peut mesurer le courant, la tension et/ou la consommation spécifiquement du second circuit, dans le cas présent la consommation due au chargement du véhicule par l'intermédiaire du shunt 105 (mesure M2) du circuit de phase SCVE. La phase en sortie du relais de puissance 104 est désignée par P" (ou phase secondaire). Un neutre N" en sortie du compteur et associé à la phase P" est connecté au neutre N. P" et N" servent à alimenter la prise électrique SCVE 109. Le processeur d'application 102 contrôle l'état du relais de puissance 104 par l'intermédiaire d'un signal de commande 108. Dans le cadre des présents exemples de réalisation, le processeur d'application agit sur le relais de puissance 104 pour contrôler la charge du véhicule électrique.

Selon un mode de réalisation particulier, le shunt de mesure SCVE 105 est optionnel. En effet, il suffit de connaître la puissance instantanée totale (charge due au véhicule et charge due à la consommation domestique) pour mettre en œuvre la méthode de contrôle de chargement de véhicule décrite.

Selon une variante de réalisation détaillée plus loin, le shunt 105 permet de régler de façon automatique des seuils de déclenchement et d'arrêt de charge (seuils haut et bas) comme décrit plus loin. Si le shunt 105 n'est pas présent, les seuils peuvent par exemple être programmés manuellement.

Il est à noter que la structure de compteur exposée ci-dessus est donnée à titre illustratif. Certaines composantes peuvent être absentes et d'autres peuvent être présentes. Par exemple, un compteur comportera une interface de communication pour le relevé de ses données de consommation. Par ailleurs certaines fonctions présentées pour plus de clarté par des composants distincts peuvent être regroupées dans un seul composant ou encore être réparties sur plusieurs composants. Par exemple, un seul processeur peut être utilisé au lieu des deux processeurs présentés, bien que le découpage utilisant deux processeurs distincts pour la métrologie d'une part et d'autres applications d'autre part (dont notamment la commande du coupe-circuit) soit courante. D'autres structures de compteur peuvent donc être envisagées.

Le dispositif 1 comporte par ailleurs une mémoire non-volatile comportant du code logiciel. Quand le code logiciel est exécuté par le processeur 102, il conduit le dispositif 100 à mettre en œuvre l'une des méthodes décrites.

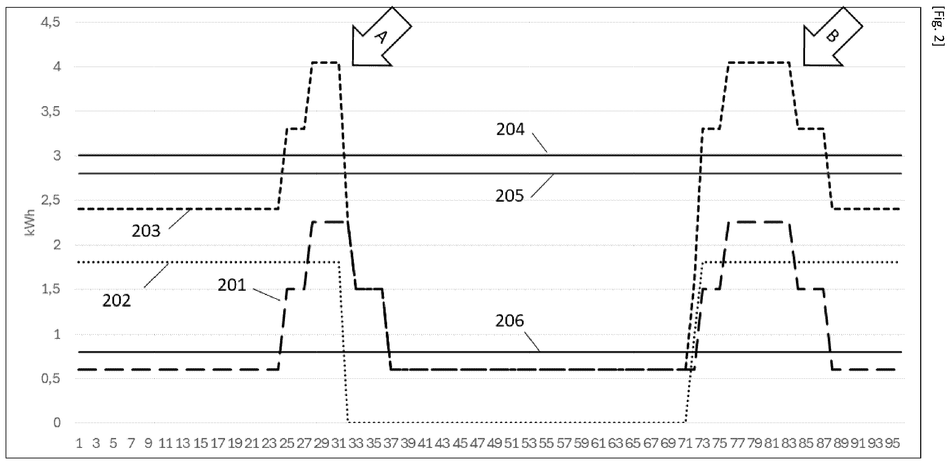

La figure 2 est un graphe représentant un exemple de courbes de charges d'un abonné telles que relevées par son compteur dans le cadre d'une consommation domestique. Dans l'exemple de la figure 2, aucun contrôle de la charge du véhicule électrique n'est mis en œuvre - cette charge peut s'effectuer en continu.

Les courbes de charge en kWh sont représentées sur une période de 24 heures, divisée en 96 périodes de 15 minutes.

Les courbes de charge représentées sont :
- la courbe de charge domestique seule 201, hors charge du véhicule électrique ;
- la courbe de charge du véhicule électrique 202 ;
- la courbe de charge totale 203 (total des deux courbes précédentes) ;

Sont représentés par ailleurs trois seuils :
- un seuil 204 représentant l'équivalent de la puissance souscrite par l'abonné (12kVA dans l'exemple illustré), soit une consommation de 3kWh sur quinze minutes, sous hypothèse d'un fonctionnement avec *cosφ =* 1 ;
- un premier seuil 205, appelé 'Seuil_Haut', ce seuil étant un seuil au-dessus duquel le relais de puissance est rouvert ;
- un second seuil 206, appelé 'Seuil_Bas', en dessous duquel le relais de puissance est refermé.

Il est à noter que les deux seuils 205 et 206 sont donnés à titre indicatif dans la figure 2, puisqu'ils n'interviennent pas dans le fonctionnement montré par cette figure.

On constate un dépassement net de l'équivalent de la puissance souscrite 204 sur certains intervalles de temps de la journée, indiquées par deux flèches A et B dans la figure 2.

Il est à noter par ailleurs que la durée d'une période peut différer de la durée de quinze minutes donnée en exemple. On choisira la durée de la période pour qu'elle soit en-dessous de la durée T1 au-delà de laquelle le coupe-circuit est actionné. Si cette durée T1 est par exemple de 20 minutes, on peut par exemple choisir une période de durée 5, 10 ou 15 minutes.

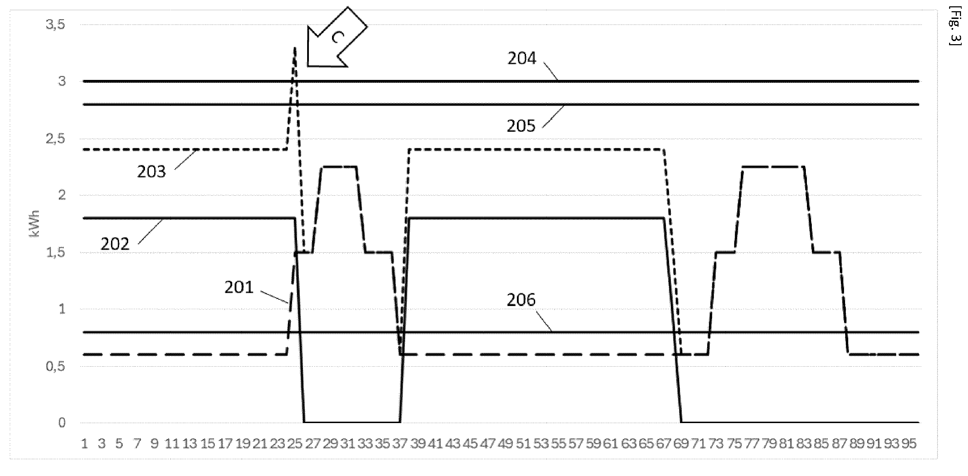

La présente divulgation vise à éviter ces dépassements, ou du moins à les limiter à une durée ne déclenchant pas le coupe-circuit du compteur. La figure 3 est un graphe représentant un exemple de courbes de charges d'un abonné telles que relevées par le compteur de cet abonné lorsque la méthode objet de la présente divulgation est appliquée.

Selon un premier exemple de réalisation d'une méthode de contrôle de charge de véhicule électrique, la charge du véhicule électrique est interrompue dès que la consommation sur une période de temps considérée dépasse ce seuil haut (205). La charge du véhicule reprend dès que la consommation sur une période de temps considérée est inférieure au seuil bas (206). Il s'agit là du fonctionnement sous forme d'hystérésis. Le seuil haut est choisi en dessous, mais proche du seuil de consommation correspondant à la puissance souscrite (204). Il est par exemple à quelques pourcents en dessous de ce seuil correspond à la puissance souscrite, par exemple de l'ordre de 3 à 7% en dessous. La marge prise peut également être ajustée empiriquement et permet de limiter l'impact de bruit dans les mesures de consommation. Plus le seuil haut est proche du seuil de consommation équivalent à la puissance souscrite, plus la fréquence d'ouverture du relais de puissance sera faible.

Le seuil bas est choisi proche, mais au-dessus, d'une consommation minimale par période de temps sur une journée. La marge avec laquelle le seuil bas se situe au-dessus de cette consommation minimale peut être du même ordre de grandeur que la marge entre le seuil haut et le seuil de consommation correspondant à la puissance souscrite, dans le but de limiter l'impact du bruit.

Les seuils bas et haut sont susceptibles de varier, l'un en fonction de la puissance souscrite, l'autre en fonction de changements dans les habitudes de consommation de l'abonné et le cas échéant des appareils fonctionnant de façon autonome dans la journée (réfrigérateurs, équipements de télécommunication, appareils en mode veille par exemple).

Dans la figure 3, le dépassement du seuil 204 de consommation correspondant à la puissance souscrite est alors limité à un seul dépassement (flèche 'C'), et limité dans le temps de façon à ce que la durée de dépassement T1 de la puissance maximale n'est pas atteinte.

Un second exemple de réalisation d'une méthode de contrôle de charge de véhicule électrique reprend le premier exemple de réalisation, à ceci près que le niveau du seuil haut est fonction de l'heure de la journée.

Selon un mode de réalisation, le niveau du seuil haut dépend du tarif applicable en fonction de l'heure, le niveau du seuil haut étant choisi plus bas lors de périodes chères par rapport à son niveau lors de périodes moins chères. Ceci a pour avantage de permettre le chargement du véhicule tout en réduisant la facture de l'abonné, car cela privilégie le chargement aux heures les moins onéreuses.

Par exemple, s'il existe un tarif jour et un tarif nuit, le seuil haut sera choisi à une première valeur pour le temps où le tarif jour est applicable et à une seconde valeur pour le temps où le tarif nuit est applicable. La première valeur est choisie plus basse que la seconde valeur, ce qui a pour effet d'interrompre le chargement du véhicule électrique à un seuil plus bas en journée que pendant la nuit. Le niveau haut du seuil haut peut être choisi comme décrit précédemment. Le niveau bas du seuil haut peut être choisi de façon à se déclencher une période sur deux. Cela peut être obtenu en additionnant la consommation minimale enregistrée sur l'ensemble des périodes de temps et la consommation nominale due à un pourcentage important (par exemple 90%) de consommation nominale en cours de charge du véhicule électrique. De fait, le chargement de la voiture électrique est alors interrompu en fin d'une période pour reprendre en fin de période suivante, ce qui engendre un chargement à 50% du temps lorsque la consommation autre que celle due au chargement du véhicule est à son niveau minimal par période.

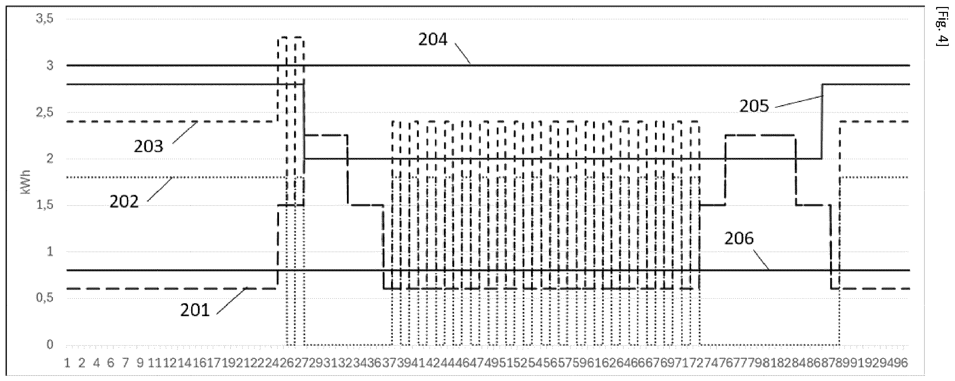

Ce comportement est illustré par le graphe de la figure 4. Le seuil 205 haut y varie entre deux niveaux, l'un pendant la nuit (21h30 à 6h45, soit les périodes de 1 à 27 et de 87 à 96) et l'autre pendant le jour (6h45 à 21h30, soit les périodes 28 à 86). Le niveau en journée est sensiblement plus bas que le niveau la nuit, ce qui engendre des interruptions bien plus fréquentes de la charge de véhicule (courbe 203) aux heures les plus onéreuses, et dans le cas illustré, un chargement du véhicule à 50% du temps entre les périodes 37 à 72.

Il est à noter que bien que la figure 4 illustre deux niveaux pour le seuil haut, il est tout à fait possible dans d'autres implémentations de prévoir plus de deux niveaux.

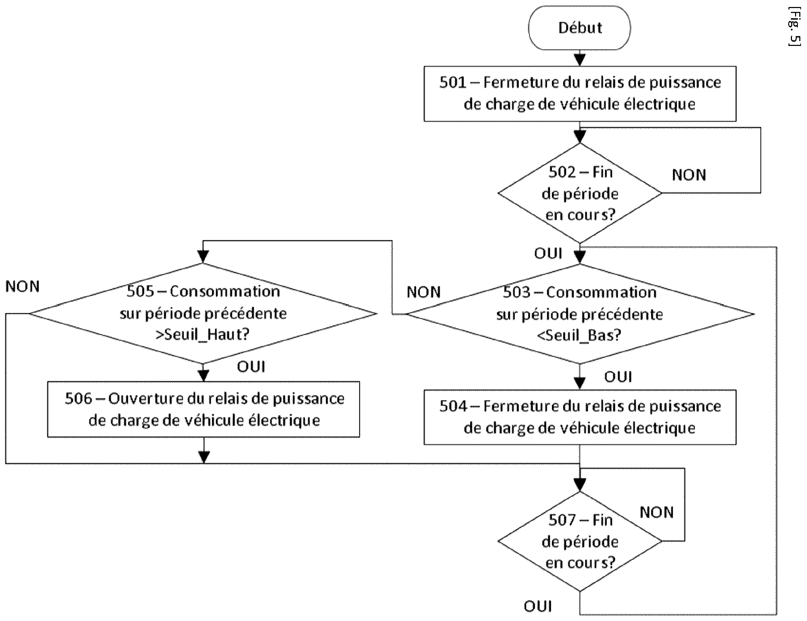

La figure 5 est un algorigramme illustrant le premier mode de réalisation. Selon ce mode de réalisation :
- En 501, le relais de puissance est fermé.
- En 502, la fin de la période en cours est attendue.
- En 503, suite à la fin de la période, dite période précédente, la consommation sur cette période est comparée au seuil bas.
   ∘ Si la consommation durant la période précédente est inférieure au seuil bas, alors le relais de puissance est fermé en 504, s'il ne l'est pas déjà. On attend alors la fin de la période en cours en 507, puis on retourne en 503.
   ∘ Si la consommation durant la période précédente est cependant supérieure ou égale au seuil bas, il est vérifié en 505 si cette consommation est supérieure au seuil haut. Dans l'affirmative, le relais de puissance est ouvert en 506, s'il ne l'est pas déjà, puis on attend la fin de la période en cours en 507, puis on retourne en 503. Dans la négative, on attend la fin de la période en cours en 507, puis on retourne ensuite en 503 pour évaluer la période terminée la plus récente.

Dans l'exemple de la figure 5, le dispositif ne dispose pas du shunt 105, ou alors en dispose mais ne l'utilise pas. Selon une variante de réalisation, le shunt 105 est utilisé pour connaître par apprentissage la valeur maximale, Imax, du courant demandé par le véhicule lors d'une charge et de déterminer les seuils bas et hauts sur cette base. Imax et la connaissance de l'impédance du shunt 105 permettent de déterminer la puissance maximale Pmax. On peut alors choisir les seuils bas et haut comme suit : ${Seuil}_{Haut} - {Seuil}_{Bas} > Emax$ où Emax = Pmax * durée de la période, ce qui correspond à l'énergie maximale demandée par le véhicule électrique lors de la charge durant une période. On peut par exemple déterminer le seuil haut en fonction du seuil de consommation équivalente à la consommation sur une période (de 15 minutes dans les exemples non limitatifs illustrés) à la puissance souscrite, en prenant une marge incluant le bruit de mesure potentiel, puis utiliser la relation ci-dessus pour définir le seuil bas. Le seuil bas doit être bien entendu également supérieur à la consommation minimale de l'installation.

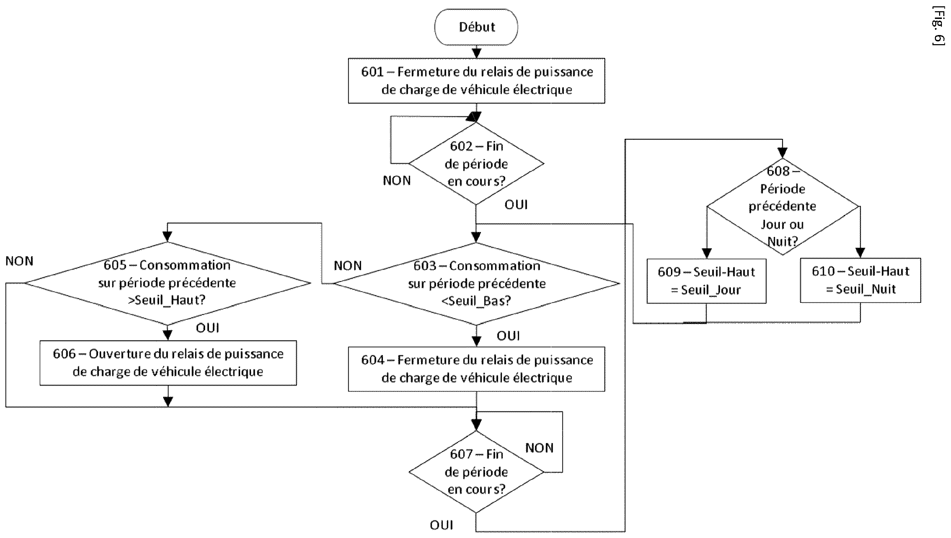

La figure 6 est un algorigramme illustrant le second mode de réalisation. Les phases 601 à 607 de cette figure sont identiques aux phases 501 à 507 de la figure 5. Il y est rajouté une modulation du seuil haut en fonction de l'heure de la journée. Dans le cas de l'exemple de la figure 6, il est inséré, après la phase 602, une détermination en 609 si la période précédente est une période durant le jour ou la nuit. Dans le premier cas, le seuil haut est pris égal en 609 à sa valeur de jour ('Seuil_Jour') et dans le second cas, le seuil haut est pris égal à sa valeur de nuit ('Seuil_Nuit'), comme expliqué précédemment. La comparaison de la consommation avec le seuil bas est alors entreprise en 603. A noter qu'il suffit que la valeur du seuil haut soit adaptée avant la comparaison de la consommation avec ce seuil en 605.

La variante de réalisation avec shunt 105 est également applicable dans le cas du second mode de réalisation.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrits peut être mise en œuvre dans du matériel, des logiciels, des microprogrammes, des intergiciels, des microcodes ou toute combinaison appropriée de ceux-ci. S'ils sont mis en œuvre dans un logiciel, les fonctions ou blocs des schémas fonctionnels et des algorigrammes peuvent être mis en œuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en œuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

### Liste des signes de référence

100 - Compteur
101 - Processeur métrologie
102 - Processeur d'application
103 - Coupe-circuit
104 - Relais de puissance
105 - Shunt
106 - Shunt
107 - Signal de commande du coupe-circuit
108 - Signal de commande du relais de puissance
109 - Prise électrique

## Revendications

1. Méthode de contrôle de l'alimentation électrique d'un deuxième groupe d'appareils comportant au moins un appareil (110), la méthode étant mise en œuvre par un dispositif (100) comprenant un premier processeur (101) adapté à réaliser des mesures de consommation électrique, un second processeur (102) et un organe de coupure (104) contrôlé par le second processeur pour déclencher ou arrêter l'alimentation du deuxième groupe, la méthode comprenant
- l'obtention par le second processeur, de la consommation électrique totale (203) d'un premier groupe d'appareils et du second groupe d'appareils pendant une période de temps, la consommation électrique totale étant déterminée par le premier processeur; la durée de la période de temps étant inférieure à une durée maximale pendant laquelle la puissance demandée par les deux groupes peut être supérieure à une puissance maximale à respecter ;
- la détermination si la consommation totale est inférieure à un second seuil (206), et dans l'affirmative, la fermeture (504, 604) de l'organe de coupure pour permettre l'alimentation du deuxième groupe ;
- la détermination (505, 605) si la consommation totale est supérieure à un premier seuil (205) et dans l'affirmative, l'ouverture (506, 606) de l'organe de coupure (104) pour suspendre l'alimentation du deuxième groupe;
- le premier seuil étant inférieur à un seuil de consommation maximale (205) à respecter pour la consommation électrique totale ; le second seuil étant inférieur au premier seuil, le second seuil étant supérieur à un minimum de consommation par période sur un intervalle de temps incluant une pluralité de périodes consécutives de même durée ;
- la réitération des étapes précédentes sur des périodes de temps successives.

2. Méthode selon la revendication 1, dans laquelle la consommation maximale est fonction de la puissance maximale à respecter.

3. Méthode selon la revendication 1 ou 2, dans laquelle le premier seuil possède une valeur unique.

4. Méthode selon la revendication 1 ou 2, dans laquelle le premier seuil est fonction de l'heure de la journée.

5. Méthode selon la revendication 4, comprenant l'assignation au premier seuil d'une première valeur (609) pour un premier tarif d'électricité fonction de l'heure et d'une seconde valeur (610) pour un second tarif d'électricité fonction de l'heure, le premier tarif étant supérieur au second tarif et la première valeur étant inférieure à la seconde valeur.

6. Méthode selon l'une des revendications 1 à 5, comprenant la détermination de la puissance maximale, Pmax, demandée par le deuxième groupe sur ladite durée, le premier seuil et le second seuil étant choisis pour respecter la relation$Premier Seuil - Second Seuil > Pmax * duree d ' une periode$

7. Méthode selon l'une des revendications 1 à 5, dans laquelle l'intervalle de temps est d'un jour.

8. Méthode selon l'une des revendications 1 à 6, dans lequel le deuxième groupe d'appareils comprend un chargeur de voiture électrique.

9. Dispositif (100) de contrôle de l'alimentation électrique d'un deuxième groupe d'appareils comportant au moins un appareil (110), le dispositif comprenant un premier processeur (101) adapté à réaliser des mesures de consommation électrique, un second processeur (102) et un organe de coupure (104) contrôlé par le second processeur pour déclencher ou arrêter l'alimentation du deuxième groupe, permettant l'obtention de la consommation électrique totale (203) du second groupe d'appareils et d'un premier groupe d'appareils pendant une période de temps, la durée de la période de temps étant inférieure à une durée maximale pendant laquelle la puissance demandée par les deux groupes peut être supérieure à une puissance maximale à respecter, le second processeur étant configuré pour conduire le dispositif à effectuer :
la détermination si la consommation totale est inférieure à un second seuil (206), et dans l'affirmative, la fermeture (504, 604) de l'organe de coupure pour permettre l'alimentation du deuxième groupe ;
la détermination (505, 605) si la consommation totale est supérieure à un premier seuil (205) et dans l'affirmative, l'ouverture (506, 606) de l'organe de coupure pour suspendre l'alimentation du deuxième groupe;
le premier seuil étant inférieur à un seuil de consommation maximale (204) à respecter pour la consommation électrique totale; le second seuil étant inférieur au premier seuil, le second seuil étant supérieur à un minimum de consommation par période sur un intervalle de temps incluant une pluralité de périodes consécutives de même durée;
la réitération des étapes précédentes sur des périodes de temps successives.

10. Dispositif selon la revendication 9, dans laquelle la consommation maximale (204) est fonction de la puissance maximale à respecter.

11. Dispositif selon la revendication 9 ou 10, le dispositif étant un compteur électrique comprenant un coupe-circuit (103) commandé par le second processeur (102), le coupe-circuit étant disposé entre une entrée de phase (P) d'un réseau de fourniture d'électricité et l'organe de coupure, l'alimentation du premier groupe étant réalisée par l'intermédiaire d'une phase (P') prise entre le coupe-circuit et l'organe de coupure, et l'alimentation du deuxième groupe étant réalisée par l'intermédiaire d'une phase (P") en sortie de l'organe de coupure.

12. Dispositif selon l'une des revendications 9 à 11, dans lequel l'organe de coupure (104) est un relais de puissance.

13. Dispositif selon l'une des revendications 9 à 12, dans lequel l'organe de coupure est relié au coupe-circuit par l'intermédiaire d'un shunt de mesure (105).

14. Dispositif selon l'une des revendications 9 à 13, dans lequel la sortie de l'organe de coupure est configurée pour être connectée à une prise électrique adaptée à la connexion du deuxième groupe d'appareils.

15. Dispositif selon l'une des revendications 9 à 14, configuré pour mettre en œuvre les étapes des revendications 2 à 8.

## Patentansprüche

1. Verfahren zum Steuern der Elektrizitätsversorgung einer zweiten Gruppe von Geräten, die mindestens ein Gerät (110) vorweist, wobei das Verfahren durch eine Vorrichtung (100) ausgeführt wird, umfassend einen ersten Prozessor (101), der geeignet ist, um Elektrizitätsverbrauchsmessungen durchzuführen, einen zweiten Prozessor (102) und eine Abschaltvorrichtung (104), die durch den zweiten Prozessor gesteuert wird, um die Versorgung der zweiten Gruppe auszulösen oder abzuschalten, das Verfahren umfassend:
- Erhalten, durch den zweiten Prozessor, des Elektrizitätsgesamtverbrauchs (203) einer ersten Gruppe von Geräten und der zweiten Gruppe von Geräten während einer Zeitperiode, wobei der gesamte Elektrizitätsverbrauch durch den ersten Prozessor bestimmt wird; wobei die Dauer der Zeitperiode kleiner als eine maximale Dauer ist, während der die von den zwei Gruppen angeforderte Leistung größer als eine einzuhaltende maximale Leistung sein kann;
- Bestimmen, ob der Gesamtverbrauch kleiner als eine zweite Schwelle (206) ist, und im bejahenden Fall, Schließen (504, 604) der Abschaltvorrichtung zum Ermöglichen der Versorgung der zweiten Gruppe;
- Bestimmen (505, 605), ob der Gesamtverbrauch größer als eine erste Schwelle (205) ist, und im bejahenden Fall, Öffnen (506, 606) der Abschaltvorrichtung (104) zum Unterbrechen der Versorgung der zweiten Gruppe;
- wobei die erste Schwelle kleiner als eine maximale Verbrauchsschwelle (205) ist, die für den Elektrizitätsgesamtverbrauch einzuhalten ist; wobei die zweite Schwelle kleiner als die erste Schwelle ist, wobei die zweite Schwelle größer als ein Mindestverbrauch pro Periode über ein Zeitintervall ist, das eine Vielzahl von aufeinanderfolgenden Perioden gleicher Dauer einschließt;
- Wiederholen der vorstehenden Schritte über aufeinanderfolgende Zeitperioden.

2. Verfahren nach Anspruch 1, wobei der Maximalverbrauch von der maximalen Leistung abhängig ist.

3. Verfahren nach Anspruch 1 oder 2, wobei die erste Schwelle einen eindeutigen Wert besitzt.

4. Verfahren nach Anspruch 1 oder 2, wobei die erste Schwelle von der Tageszeit abhängig ist.

5. Verfahren nach Anspruch 4, umfassend das Zuweisen, an die erste Schwelle, eines ersten Wertes (609) für einen ersten zeitabhängigen Elektrizitätstarif und eines zweiten Wertes (610) für einen zweiten zeitabhängigen Elektrizitätstarif, wobei der erste Tarif höher als der zweite Tarif ist und der erste Wert kleiner als der zweite Wert ist.

6. Verfahren nach einem der Ansprüche 1 bis 5, umfassend das Bestimmen der maximalen Leistung, Pmax, die von der zweiten Gruppe während der Dauer angefordert wird, wobei die erste Schwelle und die zweite Schwelle zum Einhalten der Beziehung gewählt sind$Erste Schwelle - Zweite Schwelle > Pmax * Dauer einer Periode$

7. Verfahren nach einem der Ansprüche 1 bis 5, wobei das Zeitintervall einen Tag beträgt.

8. Verfahren nach einem der Ansprüche 1 bis 6, wobei die zweite Gruppe von Geräten ein Ladegerät für ein Elektroauto umfasst.

9. Vorrichtung (100) für die Steuerung der Elektrizitätsversorgung einer zweiten Gruppe von Geräten, die mindestens ein Gerät (110) vorweist, die Vorrichtung umfassend einen ersten Prozessor (101), der geeignet ist, um Elektrizitätsverbrauchsmessungen durchzuführen, einen zweiten Prozessor (102) und ein Abschaltvorrichtung (104), die durch den zweiten Prozessor gesteuert wird, um die Versorgung der zweiten Gruppe auszulösen oder abzuschalten, wobei das Erhalten des Gesamtelektrizitätsverbrauchs (203) der zweiten Gruppe von Geräten und einer ersten Gruppe von Geräten während einer Zeitperiode ermöglicht, wobei die Dauer der Zeitperiode kleiner als eine maximale Dauer ist, während der die von den zwei Gruppen angeforderte Leistung größer als eine einzuhaltende maximale Leistung sein kann, wobei der zweite Prozessor zum Veranlassen der Vorrichtung folgendes zu bewirken, konfiguriert ist:
Bestimmen, ob der Gesamtverbrauch kleiner als eine zweite Schwelle (206) ist, und im bejahenden Fall, Schließen (504, 604) der Abschaltvorrichtung, zum Ermöglichen der Versorgung der zweiten Gruppe;
Bestimmen (505, 605), ob der Gesamtverbrauch größer als eine erste Schwelle (205) ist, und im bejahenden Fall, Öffnen (506, 606) der Abschaltvorrichtung zum Unterbrechen der Versorgung der zweiten Gruppe;
wobei die erste Schwelle kleiner als eine maximale Verbrauchsschwelle (204) ist, die für den Elektrizitätsgesamtverbrauch einzuhalten ist; wobei die zweite Schwelle kleiner als die erste Schwelle ist, wobei die zweite Schwelle größer als ein Mindestverbrauch pro Periode über ein Zeitintervall ist, das eine Vielzahl von aufeinanderfolgenden Perioden gleicher Dauer einschließt;
Wiederholen der vorstehenden Schritte über aufeinanderfolgende Zeitperioden.

10. Vorrichtung nach Anspruch 9, wobei der Maximalverbrauch (204) von der einzuhaltenden maximalen Leistung abhängig ist.

11. Vorrichtung nach Anspruch 9 oder 10, wobei die Vorrichtung ein Elektrizitätszähler ist, umfassend einen Schutzschalter (103), der durch den zweiten Prozessor (102) gesteuert wird, wobei der Schutzschalter zwischen einem Phaseneingang (P) eines Elektrizitätsversorgungsnetzes und der Abschaltvorrichtung eingerichtet ist, wobei die Versorgung der ersten Gruppe mittels einer zwischen dem Schutzschalter und der Abschaltvorrichtung abgegriffenen Phase (P') durchgeführt wird und die Versorgung der zweiten Gruppe mittels einer Phase (P'') am Ausgang der Abschaltvorrichtung durchgeführt wird.

12. Vorrichtung nach einem der Ansprüche 9 bis 11, wobei die Abschaltvorrichtung (104) ein Leistungsrelais ist.

13. Vorrichtung nach einem der Ansprüche 9 bis 12, wobei die Abschaltvorrichtung mit der Trennsicherung mittels eines Mess-Shunts (105) verbunden ist.

14. Vorrichtung nach einem der Ansprüche 9 bis 13, wobei der Ausgang der Abschaltvorrichtung konfiguriert ist, um mit einer elektrischen Steckdose verbunden zu werden, die für die Verbindung der zweiten Gerätegruppe geeignet ist.

15. Vorrichtung nach einem der Ansprüche 9 bis 14, die konfiguriert ist, um die Schritte der Ansprüche 2 bis 8 auszuführen.

## Claims

1. A method of controlling the electricity supply to a second group of appliances including at least one appliance (110), the method being implemented by a device (100) comprising a first processor (101) designed to carry out electricity consumption measurements, a second processor (102), and a shut-off switch (104) controlled by the second processor to trigger or stop the power supply to the second group, the method comprising:
- obtaining, by the second processor, the total electricity consumption (203) of a first group of appliances and of the second group of appliances over a time period, the total electricity consumption being determined by the first processor; the duration of the time period being less than a maximum duration during which the power required by the two groups may be greater than a maximum power to be complied with;
- determining whether the total consumption is less than a second threshold (206), and if so, closing (504, 604) the shut-off switch to allow power supply to the second group;
- determining (505, 605) whether the total consumption is greater than a first threshold (205), and if so, opening (506, 606) the shut-off switch (104) to suspend power supply to the second group;
- the first threshold being less than a maximum consumption threshold (205) to be complied with for the total electricity consumption; the second threshold being less than the first threshold, the second threshold being greater than a minimum consumption per period over a time interval including a plurality of consecutive periods of the same duration;
- repeating the previous steps over successive time periods.

2. The method according to claim 1, wherein the maximum consumption is a function of the maximum power to be complied with.

3. The method according to claim 1 or 2, wherein the first threshold has a single value.

4. The method according to claim 1 or 2, wherein the first threshold is a function of the time of day.

5. The method according to claim 4, comprising assigning to the first threshold a first value (609) for a first time-dependent electricity tariff and a second value (610) for a second time-dependent electricity tariff, the first tariff being greater than the second tariff and the first value being less than the second value.

6. The method according to any of claims 1 to 5, comprising determining the maximum power, Pmax, required by the second group over said duration, the first threshold and the second threshold being selected to comply with the relationship$First Threshold - Second Threshold > Pmax ∗ duration of a period$

7. The method according to any of claims 1 to 5, wherein the time interval is one day.

8. The method according to any of claims 1 to 6, wherein the second group of appliances comprises an electric car charger.

9. A device (100) for controlling the electricity supply to a second group of appliances including at least one appliance (110), the device comprising a first processor (101) designed to carry out electricity consumption measurements, a second processor (102) and a shut-off switch (104) controlled by the second processor to trigger or stop the power supply to the second group, allowing obtaining the total electricity consumption (203) of the second group of appliances and of a first group of appliances over a period of time, the duration of the time period being less than a maximum duration during which the power required by the two groups may be greater than a maximum power to be complied with, the second processor being configured to cause the device to perform:
determining whether the total consumption is less than a second threshold (206), and if so, closing (504, 604) the shut-off switch to allow power supply to the second group;
determining (505, 605) whether the total consumption is greater than a first threshold (205), and if so, opening (506, 606) the shut-off switch to suspend power supply to the second group;
the first threshold being less than a maximum consumption threshold (204) to be complied with for the total electricity consumption; the second threshold being less than the first threshold, the second threshold being greater than a minimum consumption per period over a time interval including a plurality of consecutive periods of the same duration;
repeating the previous steps over successive periods of time.

10. The device according to claim 9, wherein the maximum consumption (204) is a function of the maximum power to be complied with.

11. The device according to claim 9 or 10, the device being an electricity meter comprising a circuit breaker (103) controlled by the second processor (102), the circuit breaker being arranged between a phase input (P) of an electricity supply network and the shut-off switch, the power supply to the first group being carried out via a phase (P') between the circuit breaker and the shut-off switch, and the power supply to the second group being carried out via a phase (P'') at the output of the shut-off switch.

12. The device according to any of claims 9 to 11, wherein the shut-off switch (104) is a power relay.

13. The device according to any of claims 9 to 12, wherein the shut-off switch is connected to the circuit breaker via a measuring shunt (105).

14. The device according to any of claims 9 to 13, wherein the output of the shut-off switch is configured to be connected to an electrical outlet suitable for connecting the second group of appliances.

15. The device according to any of claims 9 to 14, configured to implement the steps of claims 2 to 8.
